(19) **Europäisches Patentamt**
**European Patent Office**
**Office européen des brevets**

(11) **EP 1 586 756 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(51) Int Cl.:
***F02B 37/18*** *(2006.01)*      ***F02D 41/00*** *(2006.01)*

(21) Anmeldenummer: **05101299.5**

(22) Anmeldetag: **21.02.2005**

(54) **Verfahren und Vorrichtung zum Betreiben einer Brennkraftmaschine**

Method and device for operating an internal combustion engine

Procédé et dispositif pour le fonctionnement d'un moteur à combustion interne

(84) Benannte Vertragsstaaten:
**DE FR IT SE**

(30) Priorität: **01.04.2004 DE 102004016010**

(43) Veröffentlichungstag der Anmeldung:
**19.10.2005 Patentblatt 2005/42**

(73) Patentinhaber: **ROBERT BOSCH GMBH**
**70442 Stuttgart (DE)**

(72) Erfinder:
• **Wild, Ernst**
**71739, Oberriexingen (DE)**
• **Wegener, Sabine**
**38527, Meine (DE)**

(56) Entgegenhaltungen:
**EP-A- 1 179 128**      **EP-A- 1 293 658**
**WO-A- 97/45633**      **DE-A1- 10 319 347**
**DE-A1- 19 732 642**      **US-A1- 2003 101 723**

**Beschreibung**

Stand der Technik

Die Erfindung geht von einem Verfahren und von einer Vorrichtung zum Betreiben einer Brennkraftmaschine nach der Gattung der unabhängigen Ansprüche aus.

Aus der nicht vorveröffentlichten deutschen Patentanmeldung mit dem Aktenzeichen 10319 347.2 ist bereits ein Verfahren zum Betreiben einer Brennkraftmaschine mit einem Verdichter und einem Stellglied zur Einstellung eines Sollladedruckes bekannt. Dabei ist der Verdichter ein von einer Turbine in einem Abgasstrang der Brennkraftmaschine angetriebener Abgasturbolader und verdichtet die der Brennkraftmaschine zugeführte Luft.

Aus der US 2003/0101723 ist es bekannt, zur genauen Regelung des Ladedrucks in einer Brennkraftmaschine mit einem Abgasturbolader die Leistung oder das Drehmoment der Turbine aus den Leistungen oder Drehmomenten des Verdichters und des Verlustes an der Welle zu bestimmen und abhängig von der Leistung oder dem Drehmoment der Turbine die Sollwertvorgabe für die Stellgröße zur Einstellung des Ladedrucks zu ermitteln. Dabei wird die Stellgröße unter anderem abhängig von einem Istwert für den Abgasdruck vor der Turbine berechnet.

Aus der DE 197 32 642 ist eine Kaskadenregelung bekannt, bei der abhängig von einer Differenz zwischen Sollladedruck und Istladedruck ein Sollabgasgegendruck und abhängig von einer Differenz zwischen Sollabgasgegendruck und Istabgasgegendruck ein Öffnungsgrad des Bypassventils oder ein Anstellwinkel der Turbinenschaufeln ermittelt wird.

Vorteile der Erfindung

Das erfindungsgemäße Verfahren und die erfindungsgemäße Vorrichtung mit den Merkmalen der unabhängigen Ansprüche haben demgegenüber den Vorteil, dass das Stellglied in Abhängigkeit eines einzustellenden Abgasgegendruckes in einem Abgasstrang der Brennkraftmaschine angesteuert wird. Die Verwendung des Abgasgegendruckes zur Ansteuerung des Stellgliedes kann in einfacher Weise dadurch geschehen, dass das Stellglied in Abhängigkeit eines einzustellenden Sollexpansionsverhältnisses über der Turbine des Abgasturboladers angesteuert wird. Auf diese Weise ist ein Betrieb der Brennkraftmaschine bei einem optimalen Wirkungsgrad des Abgasturboladers besonders in dynamischen Betriebszuständen der Brennkraftmaschine möglich.

Durch die in den abhängigen Ansprüchen aufgeführten Maßnahmen sind vorteilhafte Weiterbildungen und Verbesserungen des im Anspruch 1 gegebenen Verfahrens möglich.

Besonders vorteilhaft ist es, wenn der einzustellende Abgasgegendruck begrenzt wird. Auf diese Weise kann wirkungsvoll verhindert werden, dass die so genannte Stopfgrenze des Abgasturboladers überschritten und damit der Wirkungsgrad des Abgasturboladers in unerwünschter Weise reduziert wird.

Dies ist besonders dann möglich, wenn der einzustellende Abgasgegendruck in Abhängigkeit der Stopfgrenze des Abgasturboladers begrenzt wird.

Dabei kann die Begrenzung auch abhängig von einer Drehzahl einer Turbine des Abgasturboladers durchgeführt werden. Auf diese Weise wird insbesondere für Abgasturbolader mit variabler Turbinengeometrie der Tatsache Rechnung getragen, dass die Stopfgrenze des Abgasturboladers von der Drehzahl der Turbine abhängt.

Dies kann in einfacher Weise dadurch geschehen, dass in Abhängigkeit des Sollladedruckes ein Solldruckverhältnis über dem Verdichter ermittelt wird, dass in Abhängigkeit des Solldruckverhältnisses über dem Verdichter ein Sollexpansionsverhältnis über der Turbine des Abgasturboladers ermittelt wird, wobei das Sollexpansionsverhältnis das Verhältnis zwischen dem einzustellenden Abgasgegendruck und dem Druck am Ausgang der Turbine beschreibt, und dass das Stellglied abhängig von dem Sollexpansionsverhältnis angesteuert wird.

Entsprechend kann das Sollexpansionsverhältnis insbesondere abhängig von der Turbinendrehzahl und zur Einhaltung der Stopfgrenze des Abgasturboladers begrenzt werden.

Ein weiterer Vorteil ergibt sich, wenn aus dem gegebenenfalls begrenzten Sollexpansionsverhältnis und einem Istwert eines Abgasmassenstroms eine Sollposition des Stellgliedes ermittelt wird. Auf diese Weise lässt sich die Sollposition des Stellgliedes besonders einfach aus dem Sollexpansionsverhältnis ermitteln.

Die Genauigkeit dieser Ermittlung kann dadurch gesteigert werden, in dem die Sollposition des Stellgliedes außerdem abhängig von der Drehzahl der Turbine ermittelt wird.

Zeichnung

Ein Ausführungsbeispiel der Erfindung ist in der Zeichnung dargestellt und in der nachfolgenden Beschreibung näher erläutert. Es zeigen Fig. 1 ein Blockschaltbild einer Brennkraftmaschine, Figur 2 ein erstes Funktionsdiagramm zur Ermittlung eines Sollexpansionsverhältnisses, Figur 3 ein zweites Funktionsdiagramm zur Ermittlung einer Sollposition für die Ansteuerung eines Stellgliedes zur Einstellung eines Sollladedruckes und Figur 4 ein Blockschaltbild einer Modellierungseinheit zur Bildung der Sollposition.

Beschreibung des Ausführungsbeispiels

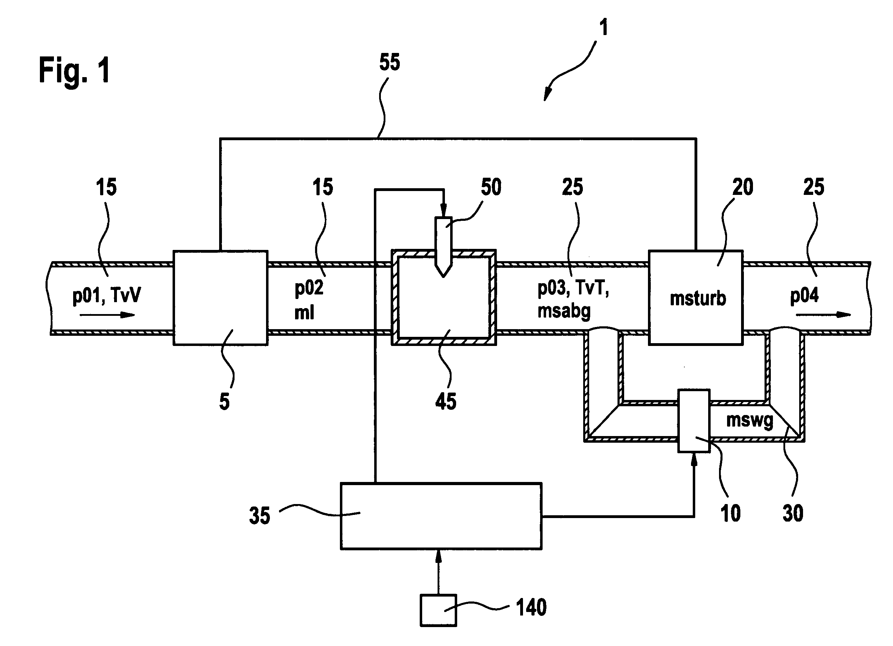

In Figur 1 kennzeichnet 1 eine Brennkraftmaschine, beispielsweise eines Kraftfahrzeugs. Die Brennkraftmaschine 1 umfasst eine Antriebseinheit mit einem Verbrennungsmotor 45, der beispielsweise als Ottomotor oder als Dieselmotor ausgebildet sein kann. Im Folgenden wird beispielhaft angenommen, dass es sich beim Verbrennungsmotor 45 um einen Dieselmotor handelt. Dem Dieselmotor 45 ist über eine Luftzufuhr 15 Frischluft zugeführt. In der Luftzufuhr 15 ist ein Verdichter 5 eines Abgasturboladers angeordnet, der die dem Dieselmotor 45 zugeführte Frischluft verdichtet. Die so verdichtete Frischluft wird über ein in Figur 1 nicht dargestelltes Einlassventil in einen ebenfalls nicht dargestellten Brennraum des Dieselmotors 45 geleitet. Über ein Einspritzventil 50 wird Kraftstoff in den Brennraum des Dieselmotors 45 eingespritzt. Das Einspritzventil 50 wird dabei von einer Motorsteuerung 35 angesteuert, um ein vorgegebenes Luft-/Kraftstoffgemischverhältnis einzustellen. Durch die Verbrennung des Luft-/Kraftstoffgemisches im Brennraum des Dieselmotors 45 werden ein oder mehrere Kolben eines oder mehrerer Zylinder des Dieselmotors 45 in den Fachmann bekannter Weise angetrieben. Die Kolben und Zylinder sind in Figur 1 ebenfalls nicht dargestellt. Die Kolben treiben eine ebenfalls nicht dargestellte Kurbelwelle an. Das bei der Verbrennung des Luft-/Kraftstoffgemisches entstehende Abgas wird über ein in Figur 1 nicht dargestelltes Auslassventil aus dem Brennraum des Dieselmotors 45 in einen Abgasstrang 25 ausgestoßen. Dort treibt das Abgas eine Turbine 20 des Abgasturboladers an. Über eine Welle 55 wird die Turbinenleistung auf den Verdichter 5 übertragen. Gemäß Figur 1 ist der Turbine 20 ein Bypass 30 parallelgeschaltet, der die Turbine 20 umgeht. Ein Öffnungsquerschnitt des Bypasses 30 lässt sich über ein Bypassventil 10 variieren. Das Bypassventil 10 stellt ein Stellglied dar, mit dem der Ladedruck und damit die Leistung des Verdichters 5 eingestellt werden kann. Das Bypassventil 10 wird auch als Wastegateklappe bezeichnet. Das Bypassventil 10 wird ebenfalls von der Motorsteuerung 35 zur Einstellung eines gewünschten Öffnungsquerschnittes des Bypasses 30 angesteuert. Zu diesem Zweck wird ein Sollhub hs von der Motorsteuerung 35 für das Bypassventil 10 vorgegeben.

Die Strömungsrichtung der Frischluft in der Luftzufuhr 15 und des Abgases im Abgasstrang 25 sind in Figur 1 jeweils durch einen Pfeil gekennzeichnet. In Figur 1 sind folgende physikalische Größen der Luftzufuhr 15 und des Abgasstrangs 25 aufgeführt: ein erster Druck $p01$ in Strömungsrichtung der Frischluft vor dem Verdichter 5, ein zweiter Druck $p02$ in Strömungsrichtung der Frischluft nach dem Verdichter 5, ein dritter Druck $p03$ in Strömungsrichtung des Abgases vor der Turbine 20 und dem Bypassventil 10, ein vierter Druck $p04$ in Strömungsrichtung des Abgases nach der Turbine 20 und dem Bypassventil 10, eine erste Temperatur $TvV$ der zugeführten Frischluft in Strömungsrichtung vor dem Verdichter 5, eine zweite Temperatur $TvT$ des Abgases in Strömungsrichtung vor der Turbine 20, ein Luftmassenstrom $ml$ durch den Verdichter 5, ein gesamter Abgasmassenstrom $msabg$, ein Abgasmassenstrom $msturb$ durch die Turbine 20 und ein Abgasmassenstrom $mswg$ durch das Bypassventil 10. Der zweite Druck $p02$ ist dabei ein Sollladedruck, der durch den Verdichter 5 eingestellt werden soll. Der dritte Druck $p03$ ist dabei ein Sollabgasgegendruck. Somit ist das Druckverhältnis $p02/p01$ ein Solldruckverhältnis über dem Verdichter 5 und das Expansionsverhältnis $p03/p04$ ein Sollexpansionsverhältnis über der Turbine 20.

Der erste Druck $p01$, der vierte Druck $p04$, die erste Temperatur $TvV$, die zweite Temperatur $TvT$, der Luftmassenstrom $ml$ durch den Verdichter 5 und der Abgasmassenstrom $msturb$ durch die Turbine 20 können jeweils durch einen geeigneten Sensor erfasst und der Motorsteuerung 35 zugeführt oder in der Motorsteuerung 35 aus geeigneten Mess-und/oder Betriebsgrößen der Brennkraftmaschine 1 in dem Fachmann bekannter Weise modelliert werden. Im Folgenden wird vorausgesetzt, dass diese Größen in der Motorsteuerung 35 bekannt sind.

Gemäß Figur 1 ist ferner eine Momentenvorgabe 140 vorgesehen, die eine Momentenanforderung an die Motorsteuerung 35 abgibt. Die Momentenvorgabe 140 kann bspw. ein Fahrerwunschmoment aus einer Fahrpedalstellung ableiten oder eine Momentenanforderung einer Fahrzeugfunktion, wie beispielsweise eines Antiblockiersystems, einer Antriebsschlupfregelung, einer Fahrgeschwindigkeitsregelung oder dergleichen an die Motorsteuerung 35 abgeben. Zu diesem Zweck kann der Momentenvorgabe eine resultierende Momentenanforderung aus dem Fahrerwunschmoment und den Momentenanforderungen der übrigen Fahrzeugfunktionen in dem Fachmann bekannter Weise ermitteln. Als Moment wird hier das Motormoment betrachtet.

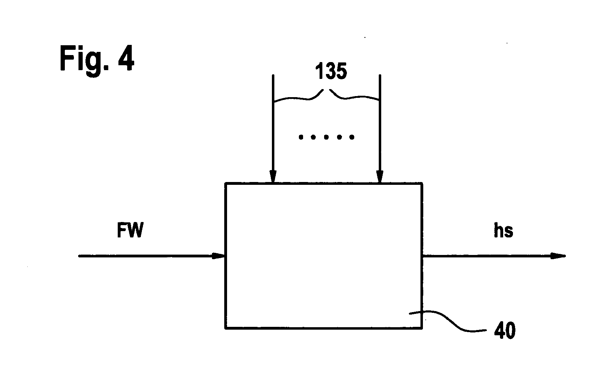

Gemäß Figur 4 ist ein Blockschaltbild einer Modellierungseinheit 40 dargestellt, die software- und/oder hardwaremäßig in der Motorsteuerung 35 implementiert sein kann. Der Modellierungseinheit 40 ist die resultierende Momentenanforderung, in diesem Beispiel das Fahrerwunschmoment FW zugeführt. Ferner sind der Modellierungseinheit 40 der erste Druck $p01$, der vierte Druck $p04$, die erste Temperatur $TvV$, die zweite Temperatur $TvT$, der Luftmassenstrom $ml$ durch den Verdichter 5 und der Abgasmassenstrom $msturb$ durch die Turbine 20 als Eingangsgrößen 135 zugeführt. Erfindungsgemäß modelliert die Modellierungseinheit 40 aus der zugeführten resultierenden Momentenanforderung und den Eingangsgrößen 135 den Sollhub hs für das Bypassventil 10 bzw. im Falle eines Abgasturboladers mit variabler Turbinengeometrie und ohne Bypass den Sollhub hs eines Stellgliedes zur Einstellung bzw. Variation der Turbinengeometrie. Anstelle der resultierenden Momentenanforderung kann allgemein ein Vorgabewert für eine Ausgangsgröße der Antriebseinheit, beispielsweise auch eine Ausgangsleistung oder ein Motormoment oder eine Motorlast oder eine aus einer der genannten Größen abgeleitete Ausgangsgröße der Antriebseinheit Verwendung finden. Im Folgenden soll jedoch beispielhaft das Motormoment als Ausgangsgröße der Antriebseinheit betrachtet werden.

Auf Basis eines isentropen Prozesses, bei dem eine Temperaturänderung einer bestimmten Druckänderung entspricht, wird eine Sollleistung Pv des Verdichters 5, die über dem Verdichter 5 in einem Zielzustand umgesetzt werden soll, wie folgt berechnet:

$$Pv = ml * cp * TvV * \frac{1}{\eta c} * \left[ \left( \frac{p02}{p01} \right)^{\frac{\gamma-1}{\gamma}} - 1 \right]$$

(1)

Dabei ist

$$\gamma = \frac{cp}{cv}$$

(2)

cp ist die spezifische Wärmekapazität von Luft unter konstantem Druck in $\frac{kJ}{kg * K}$ , cv die spezifische Wärmekapazität von Luft bei konstantem Volumen in $\frac{kJ}{kg * K}$ und $\eta c$ der Wirkungsgrad des Verdichters 5. Diese drei Größen cp, cv,

$\eta c$ sind in der Motorsteuerung 35 bekannte oder zu applizierende Konstanten. Durch den Wirkungsgrad $\eta c$ wird berücksichtigt, dass die Verdichtung mittels des Verdichters 5 nicht unter idealen Bedingungen abläuft.

Erfindungsgemäß wird weiterhin die Turbinenleistung Pt der Sollleistung Pv des Verdichters 5 gleichgesetzt und anschließend nach dem Sollexpansionsverhältnis über der Turbine 20 aufgelöst. Die Turbinenleistung Pt berechnet sich analog zur Sollleistung Pv des Verdichters 5 wie folgt:

$$Pt = msturb * cp * TvT * \eta T * \left| \left( \frac{p04}{p03} \right)^{\frac{\gamma-1}{\gamma}} - 1 \right|$$

(3)

Dabei ist $\eta T$ der Wirkungsgrad der Turbine 20. Der Wirkungsgrad $\eta T$ der Turbine 20 ist eine in der Motorsteuerung 35 bekannte oder zu applizierende Konstante. Durch den Wirkungsgrad $\eta T$ der Turbine 20 wird berücksichtigt, dass die Turbinenleistung der Turbine 20 nicht unter idealen Bedingungen gebildet wird. Löst man unter der Bedingung Pv = Pt die Gleichung (3) nach dem Sollexpansionsverhältnis p03/p04 über der Turbine 20 auf, so ergibt sich:

$$\frac{p03}{p04} = \cfrac{1}{INVPOTF\left\{\cfrac{ml * TvV * \left[\left(\dfrac{p02}{p01}\right)^{\frac{\gamma-1}{\gamma}} - 1\right]}{msturb * TvT * \eta_g}\right\}}$$

(4)

Dabei ist der Gesamtwirkungsgrad ηg das Produkt aus dem Wirkungsgrad ηT der Turbine 20 und dem Wirkungsgrad ηc des Verdichters 5. Der Gesamtwirkungsgrad ηg bzw. dessen Kehrwert kann in der Motorsteuerung 35 abhängig vom Solldruckverhältnis p02/p01 über dem Verdichter 5 und dem Temperaturverhältnis TvV/TvT mit Hilfe eines Kennfeldes 205 bspw. auf einem Motorenprüfstand appliziert werden. In stationären Betriebszuständen der Brennkraftmaschine 1 entspricht der Luftmassenstrom ml durch den Verdichter 5 etwa dem gesamten Abgasmassenstrom msabg. Bei geschlossenem Bypassventil 10 bzw. bei Abgasturboladern mit variabler Turbinengeometrie entspricht dann der Abgasmassenstrom msturb durch die Turbine 20 dem Luftmassenstrom ml durch den Verdichter 5. In diesem Fall können der Luftmassenstrom ml durch den Verdichter 5 und der Abgasmassenstrom msturb durch die Turbine 20 in Gleichung (4) heraus gekürzt werden.

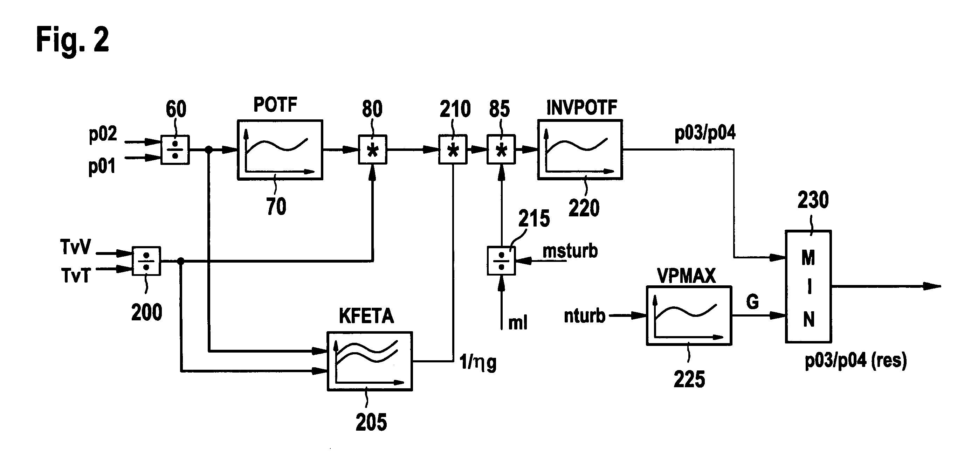

In Figur 2 ist ein Funktionsdiagramm zur Bestimmung eines Sollexpansionsverhältnisses p03/p04 über der Turbine 20 dargestellt. Dieses Funktionsdiagramm ist dabei in der Modellierungseinheit 40 implementiert. In einem ersten Divisionsglied 60 wird der Sollladedruck p02 durch den ersten Druck p01 dividiert. Der sich bildende Quotient wird einer ersten Kennlinie 70 zugeführt, die in Figur 2 auch mit POTF gekennzeichnet ist. Die erste Kennlinie 70 modelliert dabei den in eckigen Klammern stehenden Ausdruck der Gleichung (1). Der Ausgang der ersten Kennlinie 70 wird einem ersten Multiplikationsglied 80 zugeführt und dort mit dem in einem zweiten Divisionsglied 200 gebildeten Quotienten TvV/TvT der ersten Temperatur TvV und der zweiten Temperatur TvT multipliziert. Das durch das erste Divisionsglied 60 gebildete Solldruckverhältnis p02/p01 über dem Verdichter 5 und das im zweiten Divisionsglied 200 gebildete Temperaturverhältnis TvV/TvT werden als Eingangsgrößen dem Kennfeld 205 zugeführt, das den Kehrwert 1/ηg des Gesamtwirkungsgrades in Abhängigkeit des Solldruckverhältnisses p02/p01 über dem Verdichter 5 und des Temperaturverhältnisses TvV/TvT bildet und in Figur 2 auch mit KFETA gekennzeichnet ist. Der Kehrwert 1/ηg des Gesamtwirkungsgrades wird dann in einem zweiten Multiplikationsglied 210 mit der Ausgang des ersten Multiplikationsgliedes 80 multipliziert. Der Ausgang des zweiten Multiplikationsgliedes 210 wird in einem dritten Multiplikationsglied 85 mit dem in einem dritten Divisionsglied 215 gebildeten Quotienten ml/msturb des Luftmassenstroms durch den Verdichter 5 und des Abgasmassenstroms durch die Turbine 20 multipliziert. Der Ausgang des dritten Multiplikationsgliedes 85 wird einer Kennlinie 220 zugeführt, die in Figur 2 auch mit INVPOTF gekennzeichnet ist und die Umkehrfunktion der durch die Kennlinie 70 realisierten Funktion durchführt. Auf diese Weise ergibt sich nach in Figur 2 nicht dargestellter Kehrwertbildung am Ausgang der Kennlinie 220 ein Sollexpansionsverhältnis p03/p04 über der Turbine 20.

Gemäß einer vorteilhaften Weiterbildung der Erfmdung kann es optional vorgesehen sein, das Sollexpansionsverhältnis p03/p04 einer Begrenzung zuzuführen. Diese Begrenzung kann in vorteilhafter Weise so gewählt werden, dass sie der Stopfgrenze des Abgasturboladers entspricht. Die Stopfgrenze des Abgasturboladers wird für eine stehende Turbine 20 bei einem Expansionsverhältnis des Abgasgegendruckes zum Druck ausgangsseitig der Turbine 20 von etwa 1/0,52 erreicht. Bei diesem Expansionsverhältnis über der Turbine 20 erreicht die Strömungsgeschwindigkeit des Abgases Schallgeschwindigkeit und ist nicht mehr zu steigern. Bei einer weiteren Erhöhung des Expansionsverhältnisses würde somit der Wirkungsgrad des Abgasturboladers wieder sinken. Deshalb kann das Sollexpansionsverhältnis p03/p04 in erster Näherung auf den genannten Wert 1/0,52 begrenzt werden. Durch die Drehung der Turbine 20 lässt sich jedoch die Stopfgrenze des Abgasturboladers in Richtung zu höheren Expansionsverhältnissen steigern. Mit steigender Drehzahl nturb der Turbine 20 steigt auch das Expansionsverhältnis über der Turbine 20, bei dem die Stopfgrenze des Abgasturboladers erreicht wird. Dieser Effekt wird zwar durch den Bypass 30 in Abhängigkeit des Öffnungsgrades des Bypassventils 10 abgeschwächt, d. h. mit steigendem Öffnungsgrad des Bypassventils 10 nimmt die Abhängigkeit der Stopfgrenze des Abgasturboladers von der Drehzahl nturb der Turbine 20 ab. Im Falle eines Abgasturboladers mit variabler Turbinengeometrie und ohne Bypass entspricht der gesamte Abgasmassenstrom msabg dem Abgasmassenstrom msturb durch die Turbine 20 und die Abhängigkeit der Stopfgrenze des Abgasturboladers von der Drehzahl nturb der Turbine 20 wird nicht durch einen Bypass beeinträchtigt. Die Berücksichtigung der Drehzahl nturb der Turbine 20 für die Begrenzung des Sollexpansionsverhältnisses p03/p04 über der Turbine 20 auf die Stopfgrenze des Abgasturboladers kann bspw. mit Hilfe einer Kennlinie 225 erfolgen. Dabei wird der Kennlinie 225 gemäß Figur 2 die gemessene oder modellierte Drehzahl nturb der Turbine 20 als Eingangsgröße zugeführt. Die Kennlinie 225, die in Figur 2 auch mit VPMAX gekennzeichnet ist und bspw. auf einem Prüfstand appliziert werden kann, gibt dann in Abhängigkeit der Drehzahl nturb der Turbine 20 einen Grenzwert G für das Expansionsverhältnis über der Turbine 20 an ein Minimalauswahlglied 230 ab. Dem Minimalauswahlglied 230 als Begrenzungsglied wird außerdem das Sollexpansionsverhältnis p03/p04 der Kennlinie 220 zugeführt. Das Minimalauswahlglied 230 wählt dann das Minimum der beiden Eingangsgrößen p03/p04, G aus und gibt die ausgewählte Größe als resultierendes einzustellendes Sollexpansionsverhältnis p03/p04 (res) ab. Die Kennlinie 225 liefert für den Fall eines Abgasturboladers mit variabler Turbinengeometrie genauere Ergebnisse für den Grenzwert G als für den Fall eines Abgasturboladers mit Bypass 30. Bei Turbinen mit einer variablen Geometrie trifft das über die Turbine 20 fließende Abgas auf Leitschaufeln, die verstellbar sind und damit den Turbinewirkungsgrad verändern können. Beim Beschleunigen des Fahrzeugs werden die Leitschaufeln so verstellt, dass sich ein kleiner wirksamer Öffnungsquerschnitt ergibt, der den Istwert des Abgasgegendruckes vor der Turbine 20 und die Fließgeschwindigkeit des Abgases ansteigen lässt. Wenn der wirksame Öffnungsquerschnitt zu stark verringert wird, dann steigt der Istwert des Abgasgegendruckes auf Werte, bei denen die Strömungsgeschwindigkeit die Schallgeschwindigkeit erreicht und nicht mehr zu steigern ist. Wegen des kleineren effektiven Querschnitts sinkt der Wirkungsgrad wieder ab. Die Verringerung des effektiven Turbinenquerschnitts muss deshalb beim Beschleunigen auf einen Mindestquerschnitt begrenzt werden, sonst wird die maximal mögliche Beschleunigung des Fahrzeugs nicht erreicht. Dieser Mindestquerschnitt entspricht der Stopfgrenze des Abgasturboladers und wird mit Erreichen des Grenzwertes G eingestellt.

Bei einem Abgasturbolader mit Bypass 30 gemäß Figur 1 kann deshalb die Kennlinie 225 auch durch ein Kennfeld ersetzt werden, dessen Eingangsgrößen die Drehzahl nturb der Turbine 20 und der Öffnungsgrad des Bypassventils 10 sind. Somit wird dann der Grenzwert G abhängig von der Drehzahl nturb der Turbine 20 und vom Öffnungsgrad des Bypassventils 10 bestimmt. Je größer der Öffnungsgrad des Bypassventils 10, desto mehr nähert sich der Grenzwert G der Stopfgrenze für den Fall einer unbewegten Turbine 20, also dem Wert 1/0,52 für das Expansionsverhältnis über der Turbine 20. Das entsprechende Kennfeld kann ebenfalls bspw. auf einem Prüfstand appliziert werden. Die Applikation der Kennlinie 225 bzw. des entsprechenden Kennfeldes erfolgt dabei in vorteilhafter Weise so, dass der Grenzwert G die Stopfgrenze des Abgasturboladers möglichst genau abbildet.

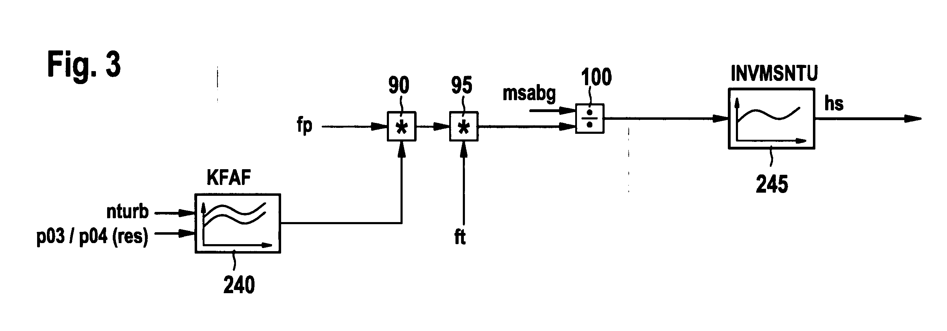

In Figur 3 ist ein Funktionsdiagramm zur Bestimmung des Sollhubes hs dargestellt. Dieses Funktionsdiagramm ist dabei in der Modellierungseinheit 40 implementiert. Für den Abgasmassenstrom msturb durch die Turbine 20 gilt:

$$msturb = msnturb(hs) * fT * fp * KFAF\left( nturb; \frac{p03}{p04}(res) \right) \tag{5}.$$

Dabei ist msnturb der Abgasmassenstrom durch die Turbine 20 unter Normbedingungen, d. h. bei einer Temperatur des Abgases von 273K, einem Druck des Abgases von 1013hPa und einer Strömungsgeschwindigkeit des Abgases gleich der Schallgeschwindigkeit. Mithilfe der Korrekturfaktoren fT für die Temperatur des Abgases, fp für den Druck des Abgases und KFAF für die Strömungsgeschwindigkeit des Abgases lässt sich dann der tatsächliche Abgasmassenstrom msturb durch die Turbine 20 gemäß Gleichung (5) ermitteln. Dabei gilt:

$$fp = p03/1013hPa \tag{6}$$

und

$$fT = \sqrt{\frac{273K}{TvT}} \tag{7}.$$

Der Korrekturfaktor KFAF für die Strömungsgeschwindigkeit wird mittels eines Kennfeldes 240 in Abhängigkeit des resultierenden Sollexpansionsverhältnisses p03/p04 (res) und der Drehzahl nturb der Turbine 20 ermittelt. Das Kennfeld 240 kann bspw. auf einem Prüfstand appliziert werden. Im Falle eines Abgasturboladers mit einem Bypass 30 nimmt die Abhängigkeit des Korrekturfaktors KFAF von der Drehzahl nturb der Turbine 20 mit zunehmendem Öffnungsgrad des Bypassventils 10 ab. Bei Vernachlässigung des Einflusses der Drehzahl nturb der Turbine 20 auf den Korrekturfaktor KFAF kann dieser auch gemäß folgender Gleichung mit Hilfe einer entsprechend bspw. auf einem Prüfstand applizierten Kennlinie ermittelt werden:

$$KFAF = \frac{\psi}{Max(\psi)} \qquad (8),$$

wobei

$$\psi\left(\frac{p04}{p03}\right) = \sqrt{\left(\frac{p04}{p03}\right)^{\frac{2}{\gamma}} - \left(\frac{p04}{p03}\right)^{\frac{\gamma+1}{\gamma}}} \qquad (9).$$

Im Folgenden soll jedoch von der Abhängigkeit des Korrekturfaktors KFAF von dem resultierenden Sollexpansionsverhältnis p03/p04(res) und der Drehzahl nturb der Turbine 20 gemäß dem Kennfeld 240 ausgegangen werden. Aus Gleichung (5) lässt sich dann die folgende Funktionen für den Sollhub hs ableiten:

$$hs = INVMSNTU\left[\frac{msturb}{fT * fp * KFAF\left(nturb; \frac{p03}{p04}(res)\right)}\right] \qquad (10).$$

Dabei ist INVMSNTU die Umkehrfunktion der Funktion msnturb(hs) und kann ebenfalls in Form einer bspw. auf einem Prüfstand applizierten Kennlinie 245 in der Modellierungseinheit 40 abgelegt sein.

Gemäß dem Funktionsdiagramm nach Figur 3 wird in einem vierten Multiplikationsglied 90 der Korrekturfaktor fp für den Druck des Abgases, der gemäß Gleichung (6) gegeben ist, mit dem Ausgang des Kennfeldes 240, der dem Korrekturfaktor KFAF für die Strömungsgeschwindigkeit entspricht, multipliziert. Der Ausgang des vierten Multiplikationsgliedes 90 wird in einem fünften Multiplikationsglied 95 mit dem Korrekturfaktor fT für die Temperatur des Abgases multipliziert, der gemäß Gleichung (7) gebildet wird. Der Abgasmassenstrom msturb durch die Turbine 20 wird in einem vierten Divisionsglied 100 durch den Ausgang des fünften Multiplikationsgliedes 95 dividiert. Der Ausgang des vierten Divisionsgliedes 100 wird dann als Eingangsgröße der Kennlinie 245, die in Figur 3 auch durch INVMSNTU gekennzeichnet ist, zugeführt. Am Ausgang der Kennlinie 245 ergibt sich dann der Sollhub hs.

Das erfindungsgemäße Verfahren und die erfindungsgemäße Vorrichtung gemäß der obigen Beschreibung ermöglichen somit eine Ansteuerung des Bypassventils 10 bzw. im Falle eines Abgasturboladers mit variabler Turbinengeometrie und ohne Bypass die Ansteuerung eines Stellgliedes zur Variation der Turbinengeometrie abhängig von einem vorgegebenen Abgasgegendruck p03. Die beschriebene Begrenzung des Sollexpansionsverhältnisses p03/p04 durch das Minimalauswahlglied 230 stellt letztlich eine, insbesondere von der Drehzahl nturb der Turbine 20 abhängige, Begrenzung des vorgegebenen Abgasgegendruckes p03 dar, wobei die Begrenzung wie beschrieben abhängig von der Stopfgrenze des Abgasturboladers durchgeführt werden kann. Auf diese Weise lässt sich ein von der Brennkraftmaschine 1 betriebenes Fahrzeug entlang der Stopfgrenze des Abgasturboladers und damit bei optimalem Wirkungsgrad des Abgasturboladers beschleunigen. Auf diese Weise wird auch eine maximale Beschleunigung des Fahrzeugs erreicht.

Im stationären Betriebszustand der Brennkraftmaschine 1 wird dann im Falle eines Abgasturboladers mit variabler Turbinengeometrie ein Turbinenquerschnitt bzw. im Falle eines Abgasturboladers mit Bypass an Öffnungsgrad des Bypassventils so gemäß Gleichung (10) eingestellt, dass sich der gewünschte Sollladedruck einstellt. Von dem Zustand maximaler Beschleunigung wird dabei der gewünschte Sollladedruck für den stationären Betriebszustand als stationärer Endwert mit leichtem Überschwingen erreicht.

Mithilfe der beschriebenen Vorsteuerung durch Ansteuerung des Bypassventils 10 bzw. des Stellgliedes zur Variation der Turbinengeometrie kann auf messbare Störgrößen der Brennkraftmaschine sofort reagiert werden und eine gegebenenfalls vorhandene Ladedruckregelung entlastet werden, die erst eine Regelabweichung abwarten muss, bevor sie reagieren kann. Mittels des erfindungsgemäßen Verfahrens und der erfindungsgemäßen Vorrichtung lässt sich also eine Vorsteuerung des Sollhubes hs realisieren, die in allen Betriebsbereichen einer aktiven Ladedruckregelung einen guten Vorsteuerungswert zur Erreichung des Ladedrucksollwertes liefert. Diese Vorsteuerung kann dabei stationär die Betriebspunkte des Ladedruckes hinreichend genau einstellen und bei messbaren Änderungen in der Regelstrecke mit sofortiger Stellsignaländerung, d. h. Änderung des Sollhubes hs reagieren. Die Ladedruckregelung muss dann nur noch nicht messbare Störungen, die sich auf Grund von Modelltoleranzen ergeben, ausregeln. Das beschriebene physikalisch basierte Berechnungsprinzip zur Bestimmung der Vorsteuergröße, in diesem Beispiel des Sollhubes hs, lässt sich dabei unabhängig vom jeweils verwendeten Ladedrucksteller bzw. Stellglied verwenden.

Durch die Modellierung des Sollhubes hs in der Modellierungseinheit 40 aus dem Fahrerwunschmoment FW und den Eingangsgrößen 135 wird eine Vorsteuerung realisiert, die es ermöglicht das Bypassventil 10 gleich in die Position zu bringen, in der es im eingeschwungenen Zustand stehen soll. Bei Einschwingen ändert sich auch das tatsächliche Druckverhältnis des Druckes in Strömungsrichtung nach dem Verdichter 5 zum ersten Druck p01. Die erste Temperatur TvV in Strömungsrichtung der Frischluft vor dem Verdichter 5 wird von der Vorsteuerung ebenfalls berücksichtigt.

## Patentansprüche

1. Verfahren zum Betreiben einer Brennkraftmaschine (1) mit einem Verdichter (5) eines Abgasturboladers zur Verdichtung der der Brennkraftmaschine (1) zugeführten Luft und einem Stellglied (10) zur Einstellung eines Sollladedruckes am Ausgang des Verdichters (5), wobei das Stellglied (10) in Abhängigkeit eines einzustellenden Abgasgegendruckes in einem Abgasstrang (25) der Brennkraftmaschine (1) angesteuert wird, **dadurch gekennzeichnet, dass** das Stellglied (10) in Abhängigkeit eines einzustellenden Sollexpansionsverhältnisses über einer Turbine des Abgasturboladers angesteuert wird.

2. Verfahren nach Anspruch 1, **dadurch gekennzeichnet, dass** der einzustellende Abgasgegendruck begrenzt wird.

3. Verfahren nach Anspruch 2, **dadurch gekennzeichnet, dass** die Begrenzung abhängig von einer Drehzahl einer Turbine (20) des Abgasturboladers durchgeführt wird.

4. Verfahren nach Anspruch 2 oder 3, **dadurch gekennzeichnet, dass** die Begrenzung abhängig von einer Stopfgrenze des Abgasturboladers durchgeführt wird.

5. Verfahren nach einem der vorherigen Ansprüche, **dadurch gekennzeichnet, dass** in Abhängigkeit des Sollladedruckes ein Solldruckverhältnis über dem Verdichter (5) ermittelt wird, dass in Abhängigkeit des Solldruckverhältnisses über dem Verdichter (5) ein Sollexpansionsverhältnis über der Turbine (20) des Abgasturboladers ermittelt wird, wobei das Sollexpansionsverhältnis das Verhältnis zwischen dem einzustellenden Abgasgegendruck und dem Druck am Ausgang der Turbine (20) beschreibt, und dass das Stellglied (10) abhängig von dem Sollexpansionsverhältnis angesteuert wird.

6. Verfahren nach einem der vorherigen Ansprüche, **dadurch gekennzeichnet, dass** das Sollexpansionsverhältnis begrenzt wird.

7. Verfahren nach Anspruch 6, **dadurch gekennzeichnet, dass** die Begrenzung abhängig von einer Drehzahl der Turbine (20) des Abgasturboladers durchgeführt wird.

8. Verfahren nach Anspruch 6 oder 7, **dadurch gekennzeichnet, dass** die Begrenzung abhängig von einer Stopfgrenze des Abgasturboladers durchgeführt wird.

9. Verfahren nach einem der vorherigen Ansprüche, **dadurch gekennzeichnet, dass** aus dem gegebenenfalls begrenzten Sollexpansionsverhältnis und einem Istwert eines Abgasmassenstroms eine Sollposition des Stellgliedes (10) ermittelt wird.

10. Verfahren nach Anspruch 9, **dadurch gekennzeichnet, dass** die Sollposition des Stellgliedes (10) außerdem abhängig von der Drehzahl der Turbine (20) ermittelt wird.

11. Vorrichtung (35) zum Betreiben einer Brennkraftmaschine (1) mit einem Verdichter (5) eines Abgasturboladers zur Verdichtung der der Brennkraftmaschine (1) zugeführten Luft und einem Stellglied (10) zur Einstellung eines Sollladedruckes am Ausgang des Verdichters (5), wobei Steuermittel (40) zur Ansteuerung des Stellgliedes (10) in Abhängigkeit eines einzustellenden Abgasgegendruckes in einem Abgasstrang (25) der Brennkraftmaschine (1) vorgesehen sind, **dadurch gekennzeichnet, dass** die Steuermittel (40) das Stellglied (10) in Abhängigkeit eines einzustellenden Sollexpansionsverhältnisses über einer Turbine des Abgasturboladers ansteuern.

**Claims**

1. Method for operating an internal combustion engine (1) having a compressor (5) of an exhaust-gas turbocharger for compressing the air which is supplied to the internal combustion engine (1) and having an actuator (10) for adjusting a target charge pressure at the outlet of the compressor (5), with the actuator (10) being activated as a function of an exhaust-gas back pressure which is to be set in an exhaust strand (25) of the internal combustion engine (1), **characterized in that** the actuator (10) is activated as a function of a target expansion ratio which is to be set across a turbine of the exhaust-gas turbocharger.

2. Method according to Claim 1, **characterized in that** the exhaust-gas pressure which is to be set is limited.

3. Method according to Claim 2, **characterized in that** the limitation is carried out as a function of a rotational speed of a turbine (20) of the exhaust-gas turbocharger.

4. Method according to Claim 2 or 3, **characterized in that** the limitation is carried out as a function of a choke limit of the exhaust-gas turbocharger.

5. Method according to one of the preceding claims, **characterized in that** a target pressure ratio across the compressor (5) is determined as a function of the target charge pressure, **in that** a target expansion ratio across the turbine (20) of the exhaust-gas turbocharger is determined as a function of the target pressure ratio across the compressor (5), with the target expansion ratio describing the ratio between the exhaust-gas back pressure which is to be set and the pressure at the outlet of the turbine (20), and **in that** the actuator (10) is activated as a function of the target expansion ratio.

6. Method according to one of the preceding claims, **characterized in that** the target expansion ratio is limited.

7. Method according to Claim 6, **characterized in that** the limitation is carried out as a function of a rotational speed of the turbine (20) of the exhaust-gas turbocharger.

8. Method according to Claim 6 or 7, **characterized in that** the limitation is carried out as a function of a choke limit of the exhaust-gas turbocharger.

9. Method according to one of the preceding claims, **characterized in that** a target position of the actuator (10) is determined from the possibly limited target expansion ratio and an actual value of an exhaust-gas mass flow.

10. Method according to Claim 9, **characterized in that** the target position of the actuator (10) is also dependent on the rotational speed of the turbine (20).

11. Device (35) for operating an internal combustion engine (1) having a compressor (5) of an exhaust-gas turbocharger for compressing the air which is supplied to the internal combustion engine (1) and having an actuator (10) for adjusting a target charge pressure at the outlet of the compressor (5), with control means (40) being provided for activating the actuator (10) as a function of an exhaust-gas back pressure which is to be set in an exhaust strand (25) of the internal combustion engine (1), **characterized in that** the control means (40) activate the actuator (10) as a function of a target expansion ratio which is to be set across a turbine of the exhaust-gas turbocharger.

**Revendications**

1. Procédé de gestion d'un moteur à combustion interne (1) comportant un turbocompresseur de gaz d'échappement équipé d'un compresseur (5) pour comprimer l'air alimentant le moteur (1) ainsi qu'un organe de réglage (10) pour régler une pression d'alimentation de consigne à la sortie du compresseur (5),
l'organe de réglage (10) est commandé en fonction de la contre-pression des gaz d'échappement à régler dans la conduite des gaz d'échappement (25) du moteur (1),
**caractérisé en ce que**

l'organe de réglage (10) est commandé par la turbine du turbocompresseur des gaz d'échappement en fonction du rapport d'expansion de consigne à régler.

**2.** Procédé selon la revendication 1,
**caractérisé en ce qu'**
on limite la contre-pression des gaz d'échappement à régler.

**3.** Procédé selon la revendication 2,
**caractérisé en ce qu'**
on effectue la limitation en fonction de la vitesse de rotation de la turbine (20) du turbocompresseur de gaz d'échappement.

**4.** Procédé selon la revendication 2 ou 3,
**caractérisé en ce qu'**
on effectue la limitation en fonction de la limite de remplissage du turbocompresseur de gaz d'échappement.

**5.** Procédé selon les revendications précédentes,
**caractérisé en ce qu'**
on détermine un rapport des pressions de consigne dans le compresseur (5) en fonction de la pression d'alimentation de consigne,
on détermine un rapport d'expansion de consigne dans la turbine (20) du turbocompresseur des gaz d'échappement en fonction du rapport des pressions de consigne dans le compresseur (5), le rapport d'expansion de consigne décrivant le rapport entre la contre-pression des gaz d'échappement à régler et la pression à la sortie de la turbine (20), et
on commande l'organe de réglage (10) en fonction du rapport d'expansion de consigne.

**6.** Procédé selon les revendications précédentes,
**caractérisé en ce qu'**
on limite le rapport d'expansion de consigne.

**7.** Procédé selon la revendication 6,
**caractérisé en ce qu'**
on effectue la limitation en fonction de la vitesse de rotation de la turbine (20) du turbocompresseur des gaz d'échappement.

**8.** Procédé selon la revendication 6 ou 7,
**caractérisé en ce qu'**
on effectue la limitation en fonction de la limite de remplissage du turbocompresseur des gaz d'échappement.

**9.** Procédé selon les revendications précédentes,
**caractérisé en ce qu'**
on détermine une position de consigne de l'organe de réglage (10) à partir du rapport d'expansion de consigne, limité le cas échéant et de la valeur réelle du débit massique des gaz d'échappement.

**10.** Procédé selon la revendication 9,
**caractérisé en ce qu'**
on détermine la position de consigne de l'organe de réglage (10) en outre en fonction de la vitesse de rotation de la turbine (20).

**11.** Dispositif (35) pour la gestion d'un moteur à combustion interne (1) comportant un turbocompresseur de gaz d'échappement avec un compresseur (5) pour comprimer l'air alimentant le moteur à combustion interne (1) ainsi qu'un organe d'actionnement (10) pour régler une pression d'alimentation de consigne à la sortie du compresseur (5), comprenant des moyens de commande (40) pour commander l'organe de réglage (10) en fonction de la contre-pression des gaz d'échappement à régler dans la veine des gaz d'échappement (25) du moteur (1),
**caractérisé en ce que**
les moyens de commande (40) agissent sur l'organe de réglage (10) en fonction d'un rapport d'expansion de consigne à régler dans la turbine du turbocompresseur de gaz d'échappement.

**Fig. 1**

EP 1 586 756 B1

# Fig. 2

# Fig. 3

EP 1 586 756 B1

# Fig. 4

FW

135

hs

40

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030101723 A
- DE 19732642